# EUROPEAN PATENT APPLICATION

(11) **EP 0 823 367 A1**
(43) Date of publication of application: **11.02.1998**
(21) Application number: 97305764.9
(22) Date of filing: 31.07.1997
(51) Int. Cl.: B62D 49/02, B62D 49/06, B62D 53/02, E02F 3/28

(54) **Mobile material handling machines**

(30) Priority: 12.02.1997 GB 9702841; 01.08.1996 GB 9616239
(71) Applicant: J T C Heard & Son, Billesdon, Leicestershire LE7 9EQ (GB)
(72) Inventor: Heard, Kenneth, John, Billesdon, Leicester LE7 9EQ (GB); Heard, Andrew Roland, Coventry CU5 6GE (GB)
(74) Representative: Archer, Philip Bruce

(57) **Abstract**

A mobile self-propelled single-telescopic-boom materials handling machine comprises a rear agricultural three point hitch (25) and hitch hook (24) located at the rear axle (14) and an engine (18) mounted directly on the rear axle (14) with its transmission (20) projecting forwardly. The vehicle cab (22) is mounted directly above the engine (18) with the boom pivot (28) mounting directly in front of the cab (22). In this way, a dedicated agriculturally-based materials handling machine is provided which permits good boom visibility, reasonable boom length, fully effective agricultural hitching arrangements and high manoeuvrability provided by individual wheel steering facilities, without the hitching and visibility and central-pivot-steer disadvantages of prior art machines.

## Description

This invention relates to mobile materials handling machines, particularly but not exclusively to such machines of the kind used in agriculture for mechanically handling large bales and the like. Such machines have in recent years taken over to some extent from agricultural tractors fitted with front end loaders, for use in certain agricultural operations such as bale handling, where their industrial pedigree arising from the use of such machines previously in non agricultural situations leads to improved operational characteristics including speed and reach and load carrying ability etc.

Thus, there has become established in the agricultural machinery business a significant sector relating to specialist four wheel drive materials handling and front end loading machines, some of which are provided with telescopic boom facilities enabling significantly increased reach to be achieved where needed.

The present invention is principally concerned with machines of this general kind in which there is provided, usually, four wheel drive, a high degree of steering manoeuvrability, a single telescopic boom which is mounted centrally between the opposite sides of the machine, and a driver's cab for control purposes.

Machines of this kind have in the past been generally constructed in accordance with the following principles. Firstly, there is the group of machines utilising unsteered axles and a central pivot steer for the machine. Typically, such a machine has the engine cantilevered out at the rear of the machine, a cab just in front of it, both these being provided on the rear pivot portion of the machine, and the boom being mounted on the front half of the centrally steered structure.

Such an arrangement has certain significant shortcomings for agricultural use, notably the central pivot steer arrangement which leads to undesirable dynamic characteristics when pulling a trailer. Likewise, this arrangement also has the related shortcoming that the hitching arrangement for agricultural use is severely affected by the presence of the rearwardly-cantilevered engine. As a result of this feature, it is not possible to provide an implement hitch at the location adopted in agricultural tractors, namely reasonably close to the vehicle rear axle. This latter feature is desirable for reasons of hitching geometry and is precluded by the engine layout, so that the expedient is unavoidably adopted of providing an elongated hitch hook arrangement from the rear axle location and below the engine, or else the facility for connecting to agricultural equipment is either dispensed with or provided simply at the rear of the engine, neither of which is acceptable for agricultural use.

A typical application of a materials handling machine of this kind relates, as mentioned above, to the handling of large rectangular or other bales and there is an immediate need in the circumstances for the mobile materials handling machine to be able to tow a trailer or the like loaded with large bales of this kind at reasonable speeds on highway locations. Additionally, an agriculturally-dedicated machine of this kind should preferably be able to undertake other agricultural duties for which a conventional three-point agricultural hitch is a requirement. Such provision is substantially impossible with a rearwardly cantilever engine.

The above reference to reasonable speeds on highway locations identifies a further shortcoming of existing machines, namely in the lack of provision of a regular variable ratio drive transmission adapted for such use, rather than the torque converter systems which have been transferred from existing industrial uses of such machines.

It must be clearly understood that dedicated materials handling machines of the kind comprising a single and telescopic boom, of relatively massive construction, are constructed on completely different design principles from adapted agricultural tractors having an optionally-attachable front end loader which can be secured to the tractor at the front end region thereof, with relatively flimsy boom structures, one at each side, operated by corresponding rams, one at each side, such an arrangement can be mounted on a conventional agricultural tractor without difficulty, and without requiring any adaptation of the structure or design integrity of same. Such is not the case with dedicated materials handling machines of the kind to which the invention relates, in which the provision for the single and centrally (with respect to lateral width)-mounted massive telescopic boom requires structural provision which seriously restricts the design freedom when locating the principal components of the machine - hence the somewhat unconventional layout of existing machines as discussed above, all of which, in their commercial forms currently, use a rearwardly-cantilever engine.

In the case of existing materials handling machines which are of the kind offering four-wheel steer and a rearward engine with a centrally-mounted boom and a central-and-side-mounted cab, the performance limitations include the above-discussed absence of agricultural hitching facilities and the limitations on visibility inherent in the side-mounted cab.

For the wider agricultural use of machines of this kind, there is a considerable need for a machine offering a combination of features including a non side-mounted cab so that adequate visibility is provided, a facility for agricultural hitching, an absence of the dynamic effects of central pivot steer on trailed agricultural implements, and a transmission offering the load hauling capacity attendant on agricultural operations of the kind discussed above. Further factors include a need for the structural integrity necessary for the adequate transfer of loads from a single and centrally mounted telescopic boom to both front and rear wheels, while offering the requisite marketplace facility for high manoeuvrability. Additionally, there is a need for a boom which should be as long as reasonably possible, so as to provide a high maximum lift facility, yet which does not compromise cab location or driver visibility. The present invention seeks to provide an improved compromise between these (to some extent) mutually conflicting factors, than has hitherto been provided, or to provide improvements generally therein.

According to the invention there is provided a mobile materials handling implement as defined in the accompanying claims.

In an embodiment described below, there is provided a mobile materials handling machine of the kind comprising a massive and single and centrally-mounted (with respect to lateral width of the machine) telescopic boom for mounting materials handling/loading means such as a bale-lifting fork. In the embodiment, the main body of the machine is rigidly constructed so far as concerns lateral turning movement of the machine, and so far as concerns the transfer of loads from the boom to both the front and rear axels in a distributed manner, and individual wheel steering facilities are provided including optional selection of front-only steering (for highway use) or four wheel steering for operation in field conditions. In this way the structurally integral (so far as boom loads are concerned) machine body transfers loads to both front and rear axels from the boom while still being able to provide high manoeuvrability without the structural complications attendant upon central pivot steer facilities.

The embodiment provides an arrangement in which the vehicle engine is mounted at a location generally between the rear wheels of the vehicle, as viewed axially thereof, rather than in a rearwardly-cantilevered fashion (as adopted by the prior art in consequence of the perceived need to use the engine as a counterbalance to offset turning moments applied to the machine by loads carried on the telescopic boom). In the embodiment, the engine is actually mounted directly above the rear axle of the vehicle ie at the rearward end of the engine/transmission assembly ie the opposite end from the conventional arrangement adopted in agricultural tractors where the engine/gear box/back axle rigid assembly is cantilevered forward from the back axle so that the engine is located in the forward region of the tractor, somewhere close to the front wheels thereof. In this way, by an unconventional engine location it is possible to achieve notable advantages with respect to the prior art, while utilising available space above the back axle which otherwise would be relatively under-utilised in terms of available cab space.

Such an arrangement of the engine creates space at the forward end of the engine/transmission assembly in the embodiment so that the mounting for the single and massive telescopic boom can be suitably integrated with the other structures of the machine, including the engine/transmission, while still meeting the need to provide a boom mounting at a location sufficiently rearwardly-located within the entire machine envelope, so that an adequate boom length can be provided. In this connection, it is notable that other machines available on the market achieve boom length by means of the extreme expedient of adopting a side-mounted cab which seriously compromises driver visibility. Creation of structural space by relocation of the engine permits an adequate boom length to be provided without the attendant disadvantage of cab relocation.

In the embodiment, the wheel base of the implement is increased by a relatively modest amount, such as 15.6 per cent (of the typical wheel base of a rear-cantilevered engine four wheel steer machine :- typical wheel base of such a prior art machine being 2.5 metres, and in the present embodiments, this is increased to 2.89 metres) whereby the required machine stability is produced without the attendant disadvantages of a rear-cantilevered engine. A commercially acceptable turning circle can nevertheless be provided.

In one embodiment of the invention, the engine is directly mounted on top of the rigid (and driven) rear axle, with the transmission gear box projecting forwardly from the engine, and with the vehicle cab located directly above the engine and gear box assembly.

In this embodiment, the above-described disposition of engine and gear box relative to the rear wheels and/or axle assembly enables the provision of an agricultural hitching assembly, such as an implement 3 point linkage and/or a hitch hook for towing trailers, at a location relatively close to the rear axle location which is effective for agricultural hitching purposes. A power take-off provision from the back axle is conveniently available likewise.

The adoption of four-wheel steer as opposed to central pivot steer enables the telescopic boom to be mounted at a location which is relatively rearwardly of the location necessarily attendant on a central-pivot-steer vehicle configuration, thereby enhancing stability. Moreover, in the embodiment the engine position is directly below the vehicle cab and this layout leads to the ability to locate the telescopic boom mounting directly in front of the cab, and at a relatively low location whereby the boom itself does not significantly reduce visibility and thus the embodiment provides a significantly improved compromise between the relatively conflicting factors relating to the disposition of the principal elements of the machine, as discussed above.

A further feature of the described embodiment relates to the provision for relative pivoting of the axle assemblies about a fore/aft pivot axis. Such a provision is desirable to maintain all four vehicle wheels equally engaged with the terrain.

In the embodiment, the feature is provided of a fore/aft or generally lengthwise-extending pivot axis between forward and rearward portions of the vehicle assembly. These portions are otherwise constructed as generally rigid assemblies, thereby simplifying construction. Moreover, the pivot assembly itself is provided, in the embodiment, in the region of the forward end of the engine and gear box assembly whereby at such a location of substantial mechanical strength the pivot provision can be readily constructed in correspondingly robust format permitting simplicity and economy of materials. Also, by mounting the telescopic boom on the forward portion of the thus-pivoted vehicle construction, the boom mounting can be located at a relatively rearward location and close to the front wall of the cab, whereby visibility implications are minimised.

The pivot construction includes a relieved region provided in one of the two main structural members which are capable of relative angular movement so that projecting components such as an oil pump mounted at this location on the engine/gear box assembly can be allowed to project through the relieved region without fouling any moveable structures when pivoting occurs.

Summarising, the invention enables the provision of an agriculturally acceptable dedicated mobile materials handling machine which retains the essential features of a massive telescopic single boom and high manoeuvrability, together with the agricultural features of a three point hitch and/or hitch hook for towing vehicles at the required agricultural location in the region of the rear axle. This is achieved by means of the radically-different engine location which, in the embodiments, is directly over the rear axle, or a comparable location where individual wheel motors are utilised in a hydraucially-driven vehicle. This engine location enables the cab to be provided above the engine at a relatively rearward location, while still permitting the agricultural hitching facilities to be provided. The result of the rearward cab location is that the single central boom can be likewise mounted relatively rearwardly and provided with a relatively very adequate length while still being integrated with the main structure of the vehicle at that location without interfering with the engine/transmission assembly.

Embodiments of the invention will now be described, by way of example only, with reference to the following illustrative drawings in which :
Fig 1 is a side elevation view of a mobile materials handling implement according to the invention;
Fig 2 is a side view of the mobile materials handling implement of Fig 1, on a smaller scale and showing the telescopic boom extended and elevated, and showing also details of a three-point agricultural hitch;
Figs 3, 4 and 5 show plan views of, respectively, a prior art machine with side and centrally-mounted cab and a rear-mounted boom and rear cantilevered engine (Fig 3), a mid-mounted boom and central steer and rear-cantilevered engine with cab in front of it (Fig 4), and a rearwardly-agriculturally-hitched machine with engine forward of the hitch and cab over the engine and a three-quarter rear mounting of the boom (Fig 5), embodiment of the present invention; and
Fig 6 shows the main structural members of a pivot assembly, together with the relative dispositions of other components, the pivot assembly providing fore/aft pivoting between the front and rear axle assemblies of the embodiment of Figs 1 and 2.

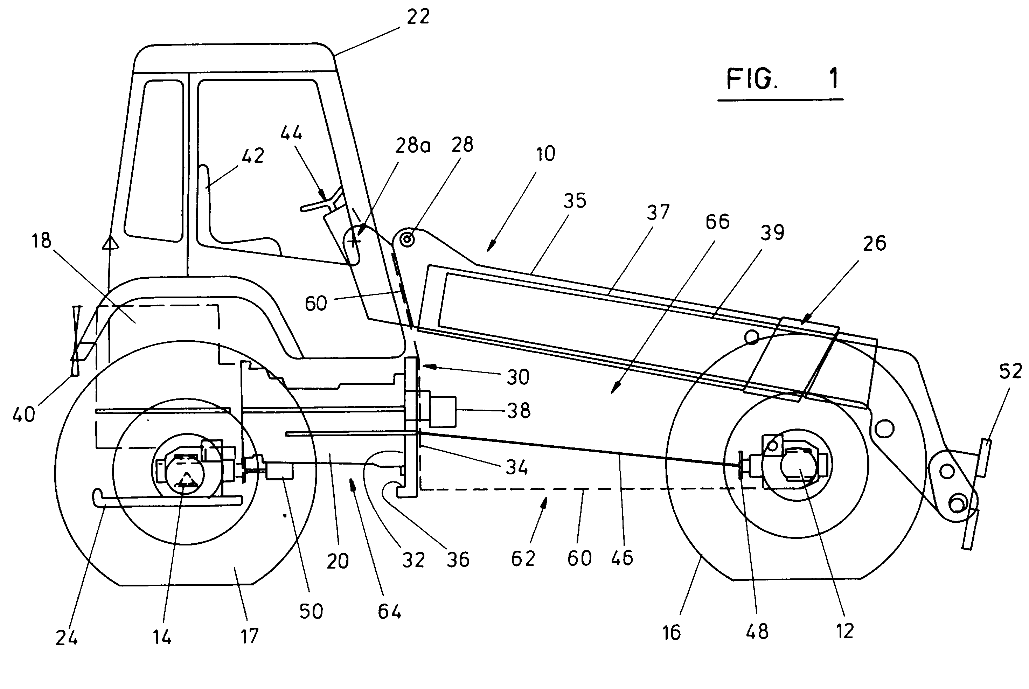

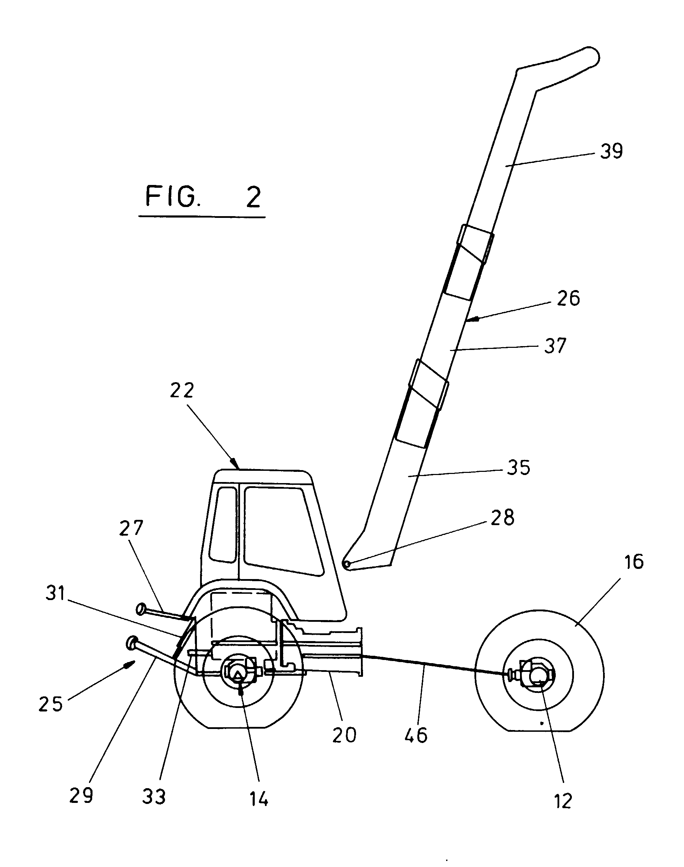

As shown in Figs 1 and 2 of the drawings, a mobile materials handling implement 10 comprises front and rear axles 12, 14 and associated ground wheels 16, 17. An engine 18 and gear box assembly 20 are mounted between the rear wheels 17 and on top of the rigid and driven rear axle 14 with the transmission gear box 20 projecting forwardly from the engine, and with the cab 22 being located directly above the engine 18 and gear box assembly 20.

Gear box 20 provides a so-called clutchless shuttle-type transmission of the kind currently used in agricultural tractor transmissions of the larger kind (eg of the order of 150 horse power) in which ratio engagement is controlled by a single lever operating solenoid valves to control multiple ratio-engage-disengage oil-immersed clutch plates, in which engagement and disengagement is controlled by oil flow. Such a gear box provides a regular variable ratio drive transmission offering tractor-type lugging power for duties which may be performed by the vehicle in addition to its loading operations, such duties being of the kind in which the vehicle's three-point hitch may be employed, such as routine tractor tasks including tillage operations, trailer haulage and the like.

The shuttle operational facilities offered by this known transmission can be utilised as a result of the vehicle's general layout including the relative disposition of the engine/gear box/cab/rear wheels whereby this relatively conventional transmission with its agricultural heavy duty and shuttle functions can be accommodated while providing the requisite mechanical drive outputs to the vehicle's rear axle and indeed the front axle.

An important advantage of the provision of a non-torque-convertor transmission is that the loader is able to offer the farmer a vehicle having clear and useful alternative functions outside materials handling and loading, whereby the vehicle becomes a commercial option for a small scale farmer where it would not otherwise be so.

Location of the engine 18 and gear box assembly 20 between (as viewed axially) the rear wheels and on top of the rear axle 14 facilitates easy access to the rear axle (as compared with rear-cantilevered engine machines) and allows for the provision of an agricultural hitching assembly 24 such as an implement three point hitch linkage (as shown in Fig 2) together with a power take-off shaft (not shown) on rear axle 14. Attachment of a hitch hook 24 below rear axle 14 (and thus below engine 18) enables effective haulage of trailed implements without attendant geometrical hitching problems, in the manner of a conventional agricultural tractor, at speeds of up to 40kph.

By locating the cab 22 above the engine 18 and gear box assembly 20, this provides a dominant driving position for the operator, allowing all-round visibility through 360 degrees. In addition, by locating the cab 22 above the rear axle and (as shown in Fig 2) forwardly of the 3 point hitch linkage, the operator can clearly see the implement linkage 25, which thus aids quick and accurate hitching and monitoring of agricultural implement operations.

Three-point hitch linkage 25 comprises a single and central top link 27 and lower spaced draught links 29, these being connected to the rear axle assembly 14 in the conventional agricultural tractor manner. Conventional hydraulic control systems for the raising and lowering of draught links 29 on the basis of loads applied to top link 27 can be provided. The links have the conventional ball ends for hitching purposes. Fig 2 shows one 31 of a pair of hydraulic lift rams for draught links 29 together with the associated pto shaft 33.

A telescopic boom 26 is mounted directly in front of cab 22 with the pivot point 28 of the boom being at a level whereby operator visibility is not significantly reduced. The boom 26 is a single and centrally-mounted telescopic boom (rather than a split boom provided at each side of the machine), and is located centrally with respect to the width of cab 22. The boom comprises telescopic boom portion 35, 37, 39 which are hydraulically extendable and retractable.

The stability of the mobile materials handling implement 10 when using either the boom 26 at the front of the implement, or the three-point linkage 25 or the hitch-hook 24 at the rear, is increased by the provision for relative pivoting of the wheel axels and machine portions about a fore/aft pivot axis, whereby a greater equalisation of wheel loading is achieved on uneven ground.

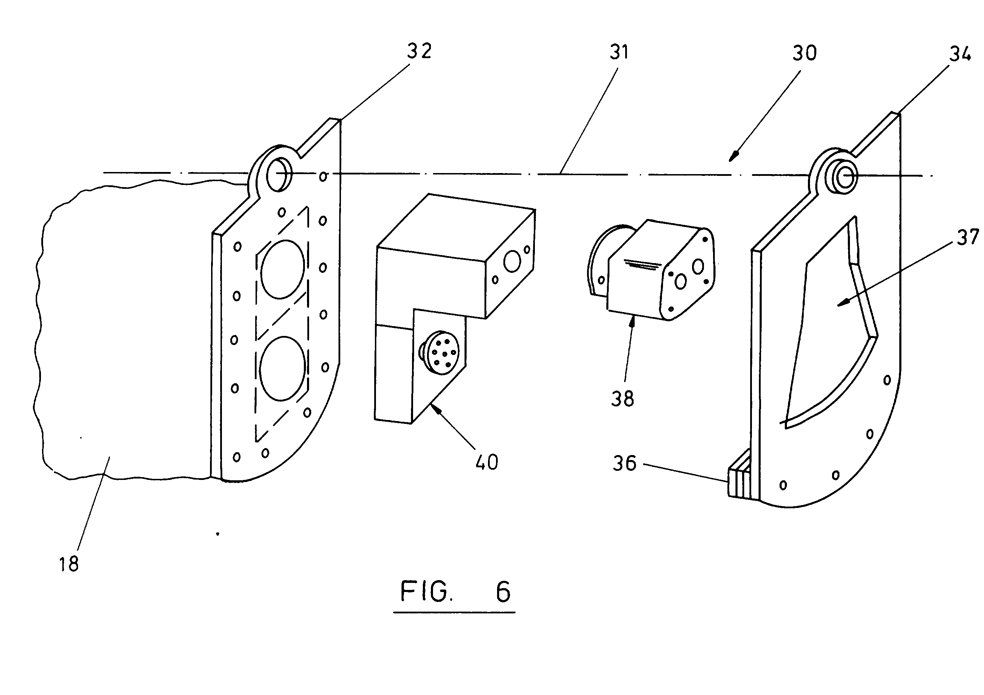

As shown in Fig 6, a central horizontal pivot means 30 is provided and defines a pivot axis 31. The pivot means 30 permits angular movement between the front and rear axles 12, 14 about axis 31 and comprises two plates 32, and 34. One plate 34 is formed with a flange or lip 36 to engage with or "clip" onto the other plate 32. The plates 32, 34 are held together by means of a pin (not shown) which acts as the pivot pin. A suitable hard wearing material is provided between plates 32, 34 to reduce frictional forces therebetween. Plate 34 is formed with an aperture or relieved region 37 such that projecting components such as the oil pump 38 and front axle drive 40 which are mounted at this location on the engine/gear box assembly can project through the aperture without fouling any movably structures when pivoting occurs.

Additional structures shown in Fig 1 include the rearwardly-mounted fan 40 on engine 18 which co-operates with a conventional engine cooling system (not shown).

Cab 22 comprises a driver's control position including a driver's seat 42 and implement controls 44, these latter being at a height with respect to boom pivot 28 such that boom visibility through the transparent front wall of cab 22 is complete.

Fig 1 also shows a rearwardly-offset position 28A for boom pivot 28 which can optionally be provided for the situation where maximum boom length is required, such as where a facility for stacking at particular heights is required. This is achieved by locating the pivot, effectively, within the cab envelope. In practice, the front wall transparent material of cab 22 is manufactured with a recessed region permitting the boom mounting to enter the recess without fouling the glass or plastic material. The provision of such a cab-modification and facility for maximum boom length is applicable to any telescopic loader, particularly four-wheel-steer loaders, regardless of their engine and transmission etc layout, although pivot-steer loaders would probably need additional space provision within the recessed cab region (for permitting the boom to enter the recess), due to their greater boom/cab turning effect due to their different geometry. The cab entry arrangement leads to the technical advantages of offering significant increases in overall boom working length arising from the fact that each extra unit length added to the boom by the cab-entry facility is multiplied by three on account of the inherent effect of the boom's telescopic structure.

Regarding the drive train, Fig 1 shows a front-wheel drive output shaft 46 connecting gear box 20 to a drive input connection 48 on front axle 12, universal joints being provided, of course. The drive output from gear box 20 to rear axle 14 is provided at 50.

Boom 26 is provided with a mounting 52 for a bale fork or other materials handling device such as a bucket or grab.

With regard to the overall structural integrity of implement 10, there is provided (but not shown in Fig 1 for clarity of illustration) a substantial support structure for boom pivot 28 whereby it is directly mounted on and connected to pivot plate 34 so as to be supported thereby for the application of boom loads to the vehicle frame and thus to the front and rear axle assemblies. Thus, generally downwardly-directed loads from the boom 26 are transmitted to the fore/aft-connected axle assemblies which are nevertheless capable of relative pivotal movement (to accommodate ground irregularities) about axis 31. In the case of boom pivot position 28A, the recessed region in the front wall of cab 22 needs to be correspondingly enlarged to accommodate pivoting about axes 31. Thus, the front portion of implement 10, including front axle 12, front wheel 16, and boom 26 and pivot plate 34 form a structurally integral unit which can pivot about axis 31 relative to the rearward portion of the implement, including cab 22, engine 18, rear axle 14, gear box 20 and pivot plate 32.

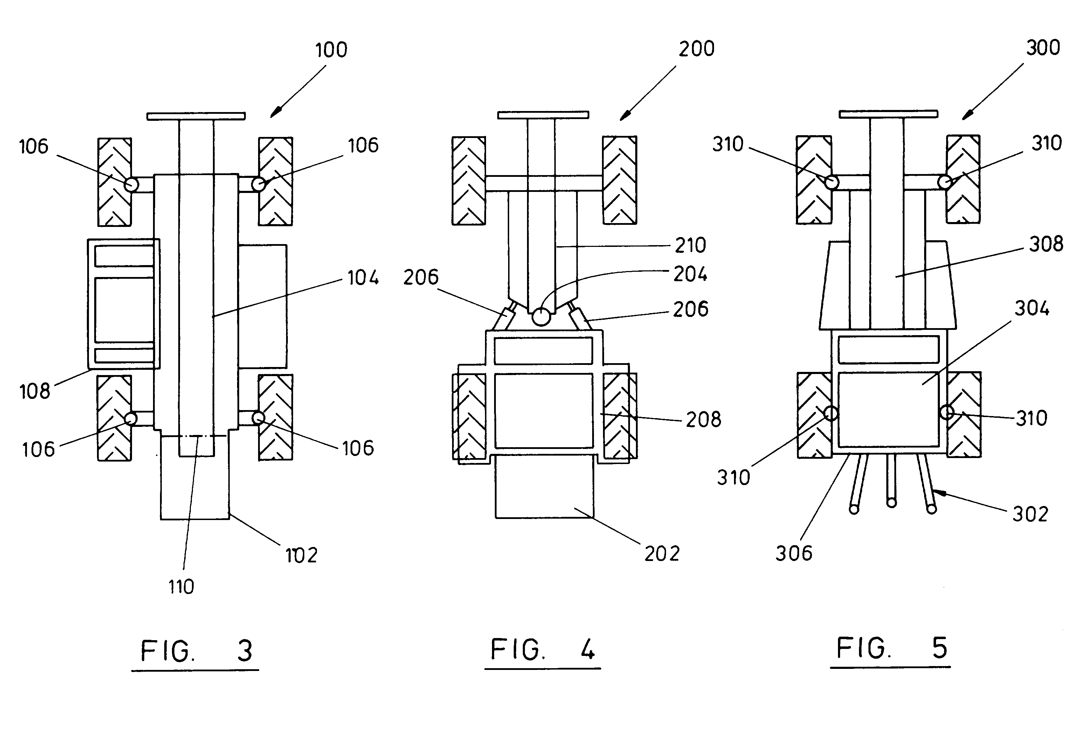

Turning now to the comparative diagrams shown in Figs 3, 4 and 5, these drawings illustrate the main functional features of the an embodiment of the present invention (Fig 5) as compared with prior proposals as shown in Figs 3 and 4.

As shown in Fig 3, implement 100 has a rear-cantilevered engine 102 and a rear-pivoted single central boom 104, wheel steering at the individual wheel locations 106 and a side-and-centrally-mounted cab 108, from which the view of loading operations is seriously compromised, in one direction, by boom 104. The latter is of relatively extended length due to its rear pivot at 110, but this advantage is substantially offset by the visibility implications of the location of cab 108. Moreover the location of engine 102 prevents the use of agricultural hitching arrangements.

The implement 200 of Fig 4 has a rear-cantileved engine 202 with a central steering pivot at 204 controlled by rams 206 and a cab 208 positioned in front of engine 202. Boom 210 is mounted forwardly of pivot 204 and on the front portion of the implement and is therefore relatively short. Agricultural hitching arrangements are not possible due to the location of engine 202.

In the embodiment of the invention shown in Fig 5, the implement 300 has an agricultural hitch 302 rearwardly of engine 304 which is positioned below cab 306. Boom 308 is mounted directly in front of cab 306 so as to have adequate length. Cab 304 provides excellent visibility. Individual wheel steering axes 310 permit the requisite high manoeuvrability without the dynamic implications of the central pivot-steer arrangement of Fig 4. A hitch-hook (not shown) for trailed implements is provided below the rear axle. Machine 300 can carry out all normal functions of an agricultural tractor while offering the high loading performance of a dedicated materials handling implement having a telescopic boom.

Other notable features of the embodiments include the radical departure from conventional machine layout for a vehicle of this kind. This can best be seen by reference to Fig 1, including the under-cab location of engine 18 with its forwardly-projecting transmission 20 which drives at 50 directly into back axle 14. The transmission structure is integral with the engine/back axle assembly, providing a structurally integral whole, which structure effectively terminates at its forward end at plate 32. Plate 32 is pivotally connected to plate 34. The latter is integral with what may be termed the forward chassis construction which is indicated in Fig 1 in broken dotted lines at 60, this structure linking front axle 12, plate 34 and the mounting including pivot 28 for boom 26, this assembly being, effectively a single structural unit identified at 62, which is pivotally connected to the rearward structural unit, likewise identified at 64.

A further notable aspect of the construction arises from the location of engine 18 below cab 22, whereby the forward region 66 of vehicle/implement 10 is relieved of this presence of an engine (as would be the case if a conventional tractor lay out were adopted, and as a result, boom 26 can be provided with an extremely low lowered position, as indicated in Fig 1.

It is to be noted that the location of engine 18 below cab 22 requires a certain amount of additional heat and sound insulation material to be provided around the engine, this material comprising asbestos substitute heat insulation and (above it) a sufficient depth of sound absorbent material.

In a modification, not shown in the drawings, there is provided a mobile self-propelled machine in which the single telescopic boom of the above embodiments is removed so as to produce, effectively, a mobile self-propelled platform which is capable of multi-functional use. For these purposes the platform is provided with quick-attach and quick-detach mounting facilities whereby there can be mounted thereon selected ones of a group of sets of interchangeable agricultural apparatus offering various agricultural facilities. For example, there could be mounted thereon spray boom apparatus including a tank, liquid delivery means, a spray boom and associated spray nozzles. In this way, the mobile platform can be converted into a sprayer at relatively short notice. A similar change operation enables the platform to be converted to other uses such as a harvesting machine.

This embodiment of the invention is envisaged as an alternative to the provision of the telescopic boom, and not as an interchangeable option therewith. In connection with this embodiment there is provided, according to the invention, a mobile self-propelled machine as defined in the accompanying claims directed to a mobile self-propelled single-telescopic-boom materials handling machine, but in which the features relating to the boom are deleted and replaced by mounting means for a series of two or more interchangeable agricultural operations facilities, such as spray boom apparatus.

The mounting means is located generally forwardly of the vehicle cab and intermediate the cab and the forward steerable wheels of the vehicle, the mounting means being located generally at the same height as the fixed boom pivot for the telescopic loader facilities, and thus well above the centre line joining the vehicle wheels.

It is envisaged that the machine option of the provision of a mobile platform with mountings for multi-functional use will be offered to a user not as a conversion option for a telescopic handler machine, but as a purchase option in respect of the original equipment. Additional features of this embodiment include the provision of a four-wheel steer function under the control of a steering control system in the vehicle cab.

## Claims

1. A mobile self-propelled single-telescopic-boom materials handling machine comprising :
a) front and rear axle means and machine structure therebetween which is generally structurally rigid in the travel direction to distribute materials loads to both said axle means;
b) four wheel steering means whereby ground wheels on said axle means are individually steered;
c) a driver's cab and an engine located in the rear half of said machine and said cab being generally centrally located with respect to the width of said machine;
characterised by
d) agricultural hitch means located at or in the region of said rear axle means; and
e) said engine being mounted generally immediately forwardly of said agricultural hitch means, and said cab being located directly above said engine, and said boom being located generally in front of said cab, and a pivot of said boom being located at or in the region of the front face of said cab.

2. A mobile self-propelled single-telescopic-boom materials handling machine comprising agricultural hitch means located at or in the region of rear axle means of the machine and an engine of the machine being mounted generally immediately forwardly of said hitch means with said cab located directly above said engine.

3. Mobile self-propelled single-boom materials handling machine characterised by an engine mounted between the rear wheels of said machine, as viewed axially.

4. A machine according to any one of the preceding claims characterised by said boom being structurally integrated with said engine, at least with respect to distribution of loads between said front and rear axle means.

5. A machine according to claim 4 characterised by a transmission assembly of said machine being mounted on said engine and located forwardly of said engine.

6. A machine according to any one of the preceding claims characterised by a pivot assembly providing a pivot axis extending generally in the travel direction and said pivot assembly being provided between forward and rearward portions of said machine to promote equal ground engagement of wheels thereof at opposite sides of the machine.

7. A machine according to claim 6 characterised by said pivot assembly being provided in the region of said engine.

8. A machine according to claim 7 characterised by said pivot assembly comprising two main structural members of which one has a cut-out or relieved region to permit structures associated with the other of said members to project therethrough.

9. A machine according to any one of claims 6 to 8 characterised by said boom being mounted on said forward portion of said machine.

10. A mobile self-propelled single-telescopic-boom materials handling machine comprising an engine, a cab, four-wheel steer ground wheels mounted on front and rear axles, and a transmission, characterised in that said engine is mounted at a location generally between the rear wheels of said machine as viewed axially thereof.

11. A machine according to any one of the preceding claims characterised in that said engine is mounted on top of a rear axle of said machine, said axle being rigid and driven by said engine.

12. A machine according to claim 11 characterised in that said engine has a transmission gear box assembly projecting forwardly therefrom.

13. A machine according to claim 12 characterised in that said transmission gear box assembly comprises a clutchless shuttle-type transmission comprising multiple ratio-engage-disengage oil-immersed clutch plates.

14. A machine according to claim 10 characterised in that said vehicle cab is located directly above said engine.

15. A machine according to any preceding claim characterised in that said agricultural hitch means comprises a three-point hitch and/or a hitch hook.

16. A machine according to any one of claims 10 to 15 characterised in that said telescopic boom is mounted directly in front of said cab at a relatively low location whereby said boom does not significantly affect visibility therefrom.

17. A machine according to claim 10 characterised in that pivot means provides for relative pivoting of said axle assemblies about a fore/aft pivot axis whereby all four wheels of the machine engage equally with the ground in use.

18. A machine according to claim 17 characterised in that said provision for relative pivoting is provided by means of a fore/aft or generally length-wise extending pivot axies between forward and rearward portions of said machine.

19. A machine according to claim 18 characterised in that a pivot assembly is provided in the region of the forward end of said engine or engine and transmission assembly.

20. A machine according to claim 19 characterised by said pivot assembly comprising two main structural members, in generally plate-form.

21. A machine according to claim 20 characterised in that said plates are pivotally connected by pin means.

22. A machine according to claim 21 characterised in that a bearing material is provided between said plates to reduce frictional effects during said relative angular movement.

23. A machine according to any one of claims 20 to 22 characterised in that said pivot assembly includes a relieved region formed in at least one of said structural members whereby projecting components mounted at this location on the engine assembly can project through said relieve region without fouling any movable structures when pivoting occurs.

24. A mobile self-propelled single-telescopic boom materials handling machine substantially as described herein with reference to the accompanying drawings.

25. A mobile self-propelled single-telescopic-boom materials handling machine comprising said boom and a control cab, characterised by said cab comprising a recessed region provided in said cab's front end region or wall and permitting said boom to enter said recess without fouling the structure of said cab.

26. A materials handling machine according to claim 25 characterised by said boom comprising a boom pivot connecting the telescopic boom to the structure of the materials handling machine, said pivot being located at the upper end of the assembly (Fig 1) whereby the space requirements at the rear end of the boom within the cab envelope are reduced.

27. A mobile self-propelled multi-function agricultural or horticultural machine comprising agricultural hitch means located at or in the region of rear axle means of the machine and an engine of the machine being mounted generally immediately forwardly of said hitch means with said cab located directly above said engine, characterised by mounting means for interchangeable agricultural operations facilities being provided on said machine at a location generally directly forwardly of said cab.

28. A machine according to claim 27 characterised by said mounting means being located between said cab and a pair of forward steerable wheels of said vehicle.

29. A machine according to claim 27 or claim 28 characterised by four-wheel steer means for said machine under the control of steering control means in said cab.

30. A machine according to any one of claims 27 to 29 characterised by transmission means for said machine being mounted on said engine and projecting forwardly in the travel direction therefrom.
